# EUROPEAN PATENT APPLICATION

(11) **EP 4 614 743 A1**
(43) Date of publication of application: **10.09.2025**
(21) Application number: 25161958.1
(22) Date of filing: 05.03.2025
(51) Int. Cl.: H02G 3/04, D03D 1/00, H05K 9/00, H01B 1/00, H01B 11/10

(54) **ELECTRICAL CONNECTION MEMBER AND METHOD OF MANUFACTURE**

(30) Priority: 06.03.2024 GB 202403265; 05.04.2024 GB 202404912
(71) Applicant: Stirling Moulded Composites Limited, Burnley, Lancashire BB12 7SN (GB)
(72) Inventor: TAYLOR, David, Burnley, BB12 7SN (GB)
(74) Representative: Meissner Bolte UK

(57) **Abstract**

There is disclosed a method for producing an electrical connection member comprising a textile cover and an inner electrical conduit, wherein the method comprises the steps of;
positioning an electrical conduit in between first and second laminate structures, wherein the first and second laminate structures have a greater width than the electrical conduit and extend to form flanges either side of the electrical conduit, wherein each laminate structure is formed of a conductive layer interposed between a first and a second non-conductive layer, and wherein the first and the second laminate structures are textile structures;
bonding together the flanges of the first and second laminate structures to form a faraday cage around the electrical conduit;
etching a portion of the first non-conductive layer of the first laminate structure from a first direction; wherein the etching removes material from the first non-conductive layer of the first laminate structure;
exposing a first surface of the conductive layer of the first laminate structure in the first direction, wherein the exposed first surface enables contact for a first grounding connection.

## Description

### Field of Invention

The present lies in the field of members for electrical connection. In particular, this invention is associated with providing an electrical connection member that is flexible, water resistant, and capable of withstanding a high degree of wear as well as frictional forces without being structurally or electrically compromised.

### Background

There is often a need to connect ancillary electrical equipment with a power source, such as a central battery pack. In some instances both the power source and electrical equipment may be in motion during use, and so could move relative to one another. Therefore, there is a need for an electrical connection member that is flexible to accommodate such motion.

The electrical equipment and power source may be used in environments with a significant amount of moisture or dirt. For example, this may include tropical areas or rainforests. In densely forested areas it may be necessary to travel by foot, and it may be necessary to carry communication means such as a radio communication device, a satellite telephone, satellite internet means (such as Starlink or equivalent) as well as other electrical devices to repel insects and/or perform other tasks. A central power source may be carried by a user and each of the electrical devices may be electrically connected to the central power source. As the user is walking through the rainforest the humidity and moisture experienced by the electrical connection member may be high. The user may have to wade through rivers, swamps or bogs, as well as cutting through vegetation. The electrical connection member must be tough and water resistant to withstand this form of use.

Other instances where similar needs arise may include arctic, Antarctic or sub-arctic reasons, deserts, mountains, or other regions with similar and/or other associated challenges.

Whilst the electrical connection member may be particularly advantageous for users who are transporting electrical equipment and power sources by foot, the electrical connection means may also be used in other circumstance. For example, it may be used for making connections in vehicles, or the like.

Moreover, other challenges are present in systems that incorporate multiple electrical connection members and electrical devices in close proximity to one another. For example, signals from one electrical connection member may interfere with those of another electrical connection member in some instances or configurations. This may also be true of electrical devices. Therefore, there is a further need (especially given the environments discussed above) for an electrical connection member where said interference is minimised.

The present application addresses technical problems associated with the above, as well as technical problems associated with the manufacture and production of said electrical connection members.

### Statements of Invention

Aspects of the invention are set out in the independent claims. Optional features are set out in the dependent claims.

In accordance with a first aspect there is provided a method for producing an electrical connection member comprising a textile cover and an inner electrical conduit, wherein the method comprises the steps of;
positioning an electrical conduit in between first and second laminate structures, wherein the first and second laminate structures have a greater width than the electrical conduit and extend to form flanges either side of the electrical conduit, wherein each laminate structure is formed of a conductive layer interposed between a first and a second non-conductive layer, and wherein the first and the second laminate structures are textile structures;
bonding together the flanges of the first and second laminate structures to form a faraday cage around the electrical conduit;
etching a portion of the first non-conductive layer of the first laminate structure from a first direction;
wherein the etching removes material from the first non-conductive layer of the first laminate structure;
exposing a first surface of the conductive layer of the first laminate structure in the first direction, wherein the exposed first surface enables contact for a first grounding connection. This may advantageously minimise interference of any signals within the electrical connection member, and may provide a flexible and tough electrical connection member.

Optionally, the bonding comprises applying an adhesive to the flanges of the first and second laminate structures and compressing the flanges, optionally wherein the adhesive is a hot melt adhesive. This may create a water resistant body such that the electrical connection member can be used in remote and high moisture environments.

Optionally, the method further comprises the steps of forming the first laminate structure; wherein the method of forming the first laminate structure comprises;
attaching the first non-conductive layer to a first side of the first conductive layer;
attaching the second non-conductive layer to a second side of the first conductive layer. Advantageously this may envelop the conductive layer - thereby improving the moisture resistant properties of the electrical connection means.

Optionally, the attachment is an adhesive attachment, optionally wherein the adhesive is a hot melt adhesive, further optionally wherein the adhesive is a Collano hot melt adhesive. This may provide for a secure attachment even if use is in a wide array of extreme environments.

Optionally, the method further comprises forming the second laminate structure; wherein the method of forming the second laminate structure is in accordance with the method of forming the first laminate structure detailed above. This may be advantageous for much the same reasons as above.

Optionally, the method comprises further enabling the first grounding connection of the conductive layer of the first laminate structure; and wherein the first grounding connection is enabled at a distal end of the electrical connection member. This may advantageously enable the electrical connection to be grounded, and remain water resistant.

Optionally, the method further comprises enabling a second grounding connection of the conductive layer of the second laminate structure ; wherein enabling the second grounding connection comprises;
rotating the electrical connection member after enabling the first grounding connection; and
wherein the second grounding connection is enabled at a distal end of the electrical connection member. This may advantageously allow the second grounding connection to be formed, and allows this formation be performed efficiently. The grounding may be performed in accordance with features of the second aspect.

Optionally, the method further comprises puncturing an aperture through the exposed surfaces of the conductive layers of both the first and second laminate structures. This may allow the grounding to also serve as a mechanical connection point, for example for connecting the electrical connection means to a connecting element.

Optionally, etching a recess at the distal end of the electrical connection member, such that the recess extends through a portion of the electrical conduit from a first side of the electrical connection member. This may provide for an electrical connection to be formed with an external device at the etching point (or via the etching point if an intermediate connection means is used).

Optionally, further comprising cutting a recess at the distal end of the electrical connection member, such that the recess extends through a portion of the electrical conduit from a first side of the electrical connection member. This may provide for an electrical connection to be formed with an external device at the etching point (or via the etching point if an intermediate connection means is used).

Optionally, the recess shapes the exposed surfaces of the conductive layers of both the first and second laminate structures into a circular shape. This may be advantageous for contacting elements of a grounding means such as a screw or the like. Any suitable means may be used for forming an electrical connection between two exposed surfaces to achieve grounding.

Optionally, further comprising exposing at least one electrical wire of the electrical conduit such that a portion of the electrical wire resides in the recess. This may enable electrical connection via an intermediate means.

Optionally, the method further comprises pulling at least one electrical wire of the electrical conduit such that a portion of the electrical wire emerges from the conduit into the recess. This may make the creation of a connector simpler and more efficient.

Optionally, the recess is substantially chevron shaped. This shape may enable a connector to be attached, and to retain the toughness and strength of the electrical connection means, without the risk of delamination or the like of the etched/cut layers.

In accordance with a second aspect of the intention there is described a method for enabling a grounding connection for a conductive layer interposed between first and second non-conductive layers, wherein the method comprises the steps of;
etching a portion of a first non-conductive layer from a first direction; wherein the etching removes material from the first non-conductive layer;
exposing a first surface of a conductive layer in the first direction, wherein the exposed first surface enables contact for a grounding connection. This may advantageously enable an efficient manufacturing method for performing grounding of a conductive layer.

Optionally, the etching comprises the steps of incrementally removing a greater depth of the portion of the first non-conductive layer; and wherein the entire depth of the portion of the first non-conductive layer is incrementally removed to expose the first surface of the conductive layer in the first direction. This incremental removal of material advantageously reduces the percentage of failures during the manufacturing process, and thus increases the efficiency of manufacture.

Optionally, the etching comprises the step of removing material from the first non-conductive layer by decrementing the entire depth of the portion of the first non-conductive layer prior to removing material in a plane that is parallel with the plane of the first non-conductive layer. This may advantageously enable the removal of material above the first conductive layer prior to removal of material adjacent the first conductive layer.

Optionally, the etching comprises the step of laser etching the portion of the first non-conductive layer from the first direction. Laser etching may enable removal of the non-conductive laser, but preserve the conductive layer.

Optionally, etching an etched line across the portion of the first non-conductive layer, and wherein the method further comprises etching a first series of etched lines across the portion of the first non-conductive layer, optionally wherein the first series of etched lines are parallel. This may advantageously create a first step to etching an area, such that a barcode like initial step is achieved.

Optionally, etching a second series of etched lines across the portion of the first non-conductive layer, wherein the etched lines of the second series are etched in between the etched lines of the first series, and wherein the second series of etched lines are etched after the first series, optionally wherein the second series of etched lines are parallel. This may complete the etching of the area.

Optionally, the etched lines of the second series of etched lines are spaced from the etched lines of the first series of etched lines, wherein the range of this spacing is between 0.1mm and 1mm, optionally wherein the spacing is 0.25mm. Advantageously this spacing may enable the etching to take place whilst reducing the risk of damage to the electrical connection member. The laser may heat the area directly around it. Therefore spacing the first series of lines from one another (and then likewise the second series of lines) allows the heating to dissipate before a further line is created in a very similar place. Where heating is too large melting or other damage may take place.

Optionally, the step of the laser being incident upon the first surface of the conductive layer, and wherein the conductive layer is resistant to the laser. This may allow the conductive layer to be preserved in the etching process.

Optionally, further comprising the step of puncturing an aperture through the exposed first surface of the conductive layer and through the thickness of the conductive layer. This may allow the grounding to be achieved with an item used for connection to a further connection means, such as a screw or the like. Any electrical connection means may be used, such as a wire, solder or the like.

Optionally, the puncturing is performed by a mechanical punch, or a laser capable of puncturing the conductive layer.

Optionally, the aperture extends through the second non-conductive layer, wherein the second non-conductive layer is located on a second side of a conductive layer to the first non-conductive layer. This may allow a single screw or the like to achieve the necessary grounding. Any conductive element may form an electrical connection between a first conductive layer and second conductive layer within an electrical connection member.

Optionally, the method comprises the step of attaching a first conductive material to the exposed first surface of the conductive layer. This may ground the first conductive layer.

In accordance with a third aspect there is provided a laminate structure for covering an electrical conduit, wherein the laminate structure comprises;
a first non-conductive layer;
a second non-conductive layer; and
a conductive layer;
wherein the conductive layer is configured to be interposed between the first and second non-conductive layers;
wherein the first non-conductive layer comprises a removed portion;
wherein the removed portion exposes a first surface of the conductive layer

in a first direction. This provides a laminated, water resistant, tough sheath. The sheath can then form the cover for an electrical conduit in order to form an electrical connecting member.

Optionally, the exposed first surface of the conductive layer is configured to form a grounding connection point for a second conductive material. This may increase the usability and safety of the device.

Optionally, the exposed first surface of the conductive layer comprises a central aperture for use in the grounding connection point. This may enable the grounding to be input with minimal difficulty.

Optionally, the laminate structure is greater in width than the electrical conduit it covers; and wherein the laminate structure extends beyond the width of the electrical conduit to form flanges. The flanges may advantageously prevent water ingress.

Optionally, the removed portions are configured to be situated on the flanges, optionally wherein the exposed first surface of the laminate structure is configured to be situated on the flanges. This may increase ease of manufacture as there is less risk of damage to the internal working of the device.

Optionally, the removed portion is circular in shape, optionally wherein the exposed first surface of the conductive layer is circular in shape. This may be advantageous for coupling with a further connecting member.

Optionally, the laminate structure is an elongate strip of the laminate structure, and wherein the laminate structure is an elongate strip of a laminate textile. The textile may make the laminate structure resistant to wear and suitable for use in numerous challenging environments.

Optionally, the removed portion is configured to be situated at a distal end of the elongate strip; optionally wherein the exposed first surface of the conductive layer is configured to be situated at a distal end of the elongate strip.

Optionally, the laminate structure comprises a second removed portion situated at the distal end of the elongate strip; optionally wherein the laminate structure comprises an exposed second surface of the conductive layer situated at the distal end of the elongate strip. This may allow two points of contact with a connecting member.

Optionally, the first and second removed portions are separated by the width of the elongate strip; optionally wherein the exposed first and second surfaces of the conductive layer are separated by the width of the elongate strip. This may provide for a secure mechanical join between the grounding/connection means and the elongate strip.

Optionally, the distal end of the elongate strip comprises a chevron-shaped recess. This may allow for ease of access to the electrical conduit for forming the electrical connection.

Optionally, wherein the chevron-shaped recess extends from in between the first and second removed portions and into the elongate strip in a longitudinal direction.

Optionally, the depth of the chevron-shaped recess is such that it extends across all three layers of the laminate structure. This enables the electrical conduit to be exposed for electrical connection.

Optionally, the removed portion is formed by etching the first non-conductive layer.

Optionally, the removed portion is formed by laser etching the first non-conductive layer. Laser etching may be an efficient way of removing material, and in some instances selectively removing material based on material properties.

Optionally, one dimension of the elongate strip is substantially less than two other dimensions, optionally wherein the smallest dimension is the thickness of the elongate strip, wherein the thickness of the elongate strip is defined as the dimension that spans the multiple layers of the laminate structure. This allows the laminate to be a longitudinal strip, and to have dimensional properties akin to such an electrical connector.

Optionally, the attachment between the first non-conductive layer and the conductive layer is an adhesive attachment, optionally wherein the attachment between the second non-conductive layer and the conductive layer is an adhesive attachment. This may provide for a water resistant bond.

Optionally, the adhesive is a hot melt adhesive, optionally wherein the hot melt adhesive is a Collano hot melt adhesive. This may be particularly well suited to harsh environments and high levels of moisture.

Optionally, the first and second non-conductive layers comprise of one or more waterproof layers. This may prevent water ingress through the non-conductive layers.

Optionally, the first non-conductive material is configured to be a made from a nylon ripstop material. This may cause the laminate structure to be resistant to high degrees of friction, or hearing, forces.

Optionally, the second non-conductive material is configured to be made from a nylon ripstop material with a TPU backing. This may further aid with improving water resistance.

Optionally, the conductive material is a polyamide material, optionally wherein the conductive layer is a nylon 6.6 riptstop material, further optionally wherein it is a Bremen material. These materials may be particularly effective at improving the strength and water resistance of the strip.

Optionally, the laminate structure is configured to form a portion of a Faraday cage around an electrical conduit. This may isolate the electrical conduit so that signals are not distorted by interference and the like.

Optionally, the laminate structure comprises a third removed portion; optionally wherein the laminate structure comprises an exposed third surface of the conductive layer; further optionally wherein the laminate structure comprises a fourth removed portion; further optionally, wherein the laminate structure comprises an exposed fourth surface of the conductive layer. This may enable both ends of the strip to be grounded in the same manner.

Optionally, the third removed portion is located at a proximal end of the elongate strip, optionally wherein the exposed third surface of the conductive layer located at a proximal end of the elongate strip; further optionally wherein the fourth removed portion is located at the proximal end of the elongate strip; further optionally wherein the exposed fourth portion of the conductive layer is located at a proximal end of the elongate strip.

In accordance with a fourth aspect there is provided an electrical connection comprising a textile cover and an inner electrical conduit, wherein the electrical connection member comprises:
a first laminate structures in accordance with the third aspect;
a second laminate structure in accordance with the third aspect;
an electrical conduit;
wherein the electrical conduit is interposed between the first and second laminate structures;
wherein the first and second laminate structures have a greater width than the electrical conduit such that the first and second laminate structures extend beyond the width of the electrical conduit;
wherein the extended portions of the first and second laminate structures are attached together to form a faraday cage around the electrical conduit. This may provide an electrical connecting member that is free from electrical signal interference, is tough, and water resistant.

Optionally, the first non-conductive layers of each of the first and second laminate structures are configured to face opposite directions. This may provide the textile on the outer surface to improve toughness of the device.

Optionally, the attachment is configured to be between a first side of the second non-conductive layer of the first laminate structure and a first side of the second non-conductive later of the second laminate structure. This may enable attachment at the flanges to be efficient.

Optionally, the depth of the chevron-shaped recess of both the first and second laminate structures is configured to further extend across a portion of the electrical conduit located in between the first and second laminate structures. This may enable the electrical wire of the electrical conduit to be exposed.

Optionally, the textile cover is configured to form a faraday cage around the electrical conduit. This may aid in reducing electrical interference.

Optionally, the central apertures of the exposed surfaces of the conductive layers of both the first and second laminate structures are co-axial and extend through the entire thickness of the textile cover. This may enable a single screw or the like to pass through both apertures. Any conductive element may be used to form an electrical connection between the conductive layers of the first and second laminate structures. This may enable the faraday cage to become effective.

In accordance with a fifth aspect there is provided a kit of parts for a textile cover for an electrical conduit, wherein the kit of parts comprises;
an electrical connection member in accordance with any of the fourth aspect; and
a ground connection fixing.

### Brief Description of Figures

Figure 1a is a cross sectional end view of a portion of a laminate structure when it is overlying an electrical conduit.
Figure 1b is a top view of the arrangement of Figure 1a and shows the entire width of the laminate structure.
Figure 1c is a cross sectional end view of the arrangement of Figure 1 showing the entire width of the laminate structure.
Figure 2 is a top view of the entire length of the laminate structure of Figure 1 when overlying the electrical conduit.
Figure 3 is a cross sectional end view of an electrical connection member that is formed from two laminate structures seen in Figures 1 and 2.
Figure 4 is a flowchart of a method for enabling a grounding connection for a conductive layer interposed between first and second non-conductive layers.
Figure 5 is a view showing the etched lines of an etching process seen in the method of Figure 4.
Figure 6 is a flowchart showing a method for producing an electrical connection member comprising a textile cover and an inner electrical conduit.

### Detailed Description of Figures

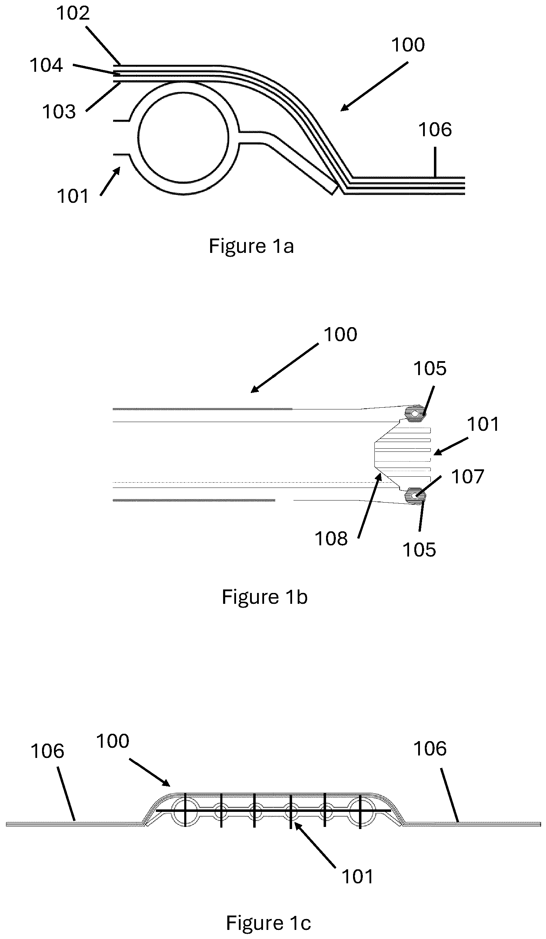

Figures 1a-c show a laminate structure 100 for covering an electrical conduit 101, wherein the laminate structure 100 comprises; a first non-conductive layer 102; a second non-conductive layer 103; and a conductive layer 104; wherein the conductive layer 104 is configured to be interposed between the first 102 and second 103 non-conductive layers; wherein the first non-conductive layer 102 comprises a removed portion 105; wherein the removed portion 105 exposes a first surface of the conductive layer 104 in a first direction.

Figure 1a is a cross sectional end view of a portion of the laminate structure 100 when it is overlying the electrical conduit 102 and best shows these three layers. Figure 1b is a top view of this arrangement showing the entire width of the laminate structure 100 and best shows the removed portion 105 of the first non-conductive layer 103. Figure 1c is a cross sectional end view of the laminate structure 100 showing the entire width of the laminate structure 100. Figure 1c shows that, in this embodiment, the lateral structure 100 is greater in width than the electrical conduit 102 and extends beyond its lateral sides to form flanges 106. Whilst the electrical conduit is shown in Figures 1a-c the laminate structure itself (without the electrical conduit present) may be used on its own. For example, the laminate structure may encase any other member where protection by a faraday cage is advantageous.

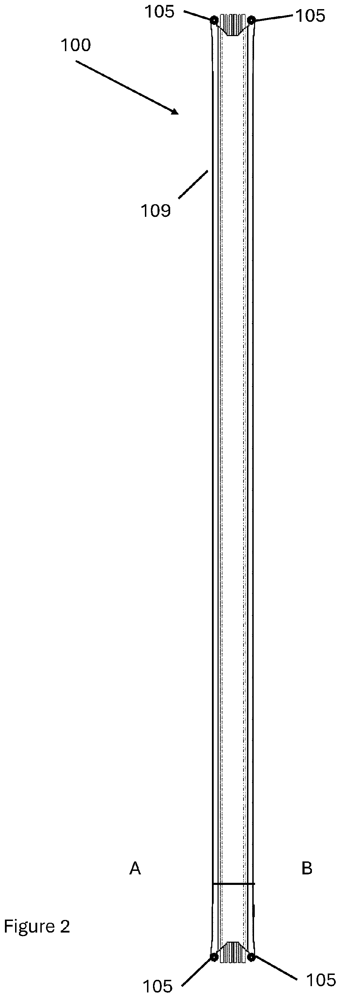

It is understood that the Figures 1a-c of the laminate structure 100 relate to only a portion of an elongate strip of laminate structure 100 that is best seen its entirety in Figure 2. It is also understood that although the features of the laminate structure 100 are described in part with reference to this elongate strip, it is entirely possible for alternative embodiments to implement strips of various shapes and may even adopt an entirely different shape to that of a strip yet still fall within the invention described below.

The removed portion 105 of the first non-conductive layer 102 mentioned above refers to a portion of the first non-conductive layer 102 that has been removed along the entire depth (or thickness) of the first non-conductive layer 102. This removed portion 105 may be formed by the etching, and in this embodiment by the laser etching, of the first non-conductive layer (the detailed method of this removal is explored later in this description). Due to the conductive layer 104 lying underneath the first non-conductive layer 102, this removal naturally exposes a first surface of the conductive layer in the direction of that seen in Figure 1b. This exposed first surface of the conductive layer 104 provides a surface for a grounding connection point with a second conductive material (not shown). This grounding connection point aids in grounding the conductive layer 104 (i.e. providing a route for excess charged particles) when the conductive layer 104 is in electrical communication with the electrical conduit 102 (and wherein the electrical conduit is carrying a charge/current).

Figure 1a shows a clear view of the first 102 and second 103 non-conductive layers and the conductive layer 104 being interposed between them. The attachment between the conductive layer 104 and the first 102 and second 103 non-conductive layers in this embodiment is an adhesive attachment. Whereby, a first side of the conductive layer 104 adhesively attaches onto a second side of the first non-conductive layer 102 (the first side of the conductive layer being the side in view in Figure 1b), and wherein a second side of the conductive layer 104 adhesively attaching onto a second side of the second non-conductive layer 103. Here, the first side of the second non-conductive layer 103 may be the side adjacent or in contact with the electrical conduit 102. The adhesive used in these attachments in a holt melt adhesive, and more specifically is a Collano hot melt adhesive.

In terms of materials for each of the layers seen in Figure 1, the first 102 and second 103 non-conductive layers are a constructed from a waterproof layer, or at least comprise of a waterproof layer as part of their structure. As such, the first 102 and second 103 non-conductive layers in this embodiment may be made from a nylon ripstop material. The second non-conductive layer 103 in this embodiment has a further TPU backing. The conductive layer 104 of Figure 1a is a polyamide material, constituting a nylon 6.6 riptstop material. This may alternatively be known as a Bremen material.

The embodiment of Figure 1b has two exposed first and second surfaces of the conductive layer (due to having first and second removed portions 105 of the first non-conductive layer) and as such has two grounding connection points. These grounding connection points are separated by the width of the laminate structure 100 (or elongate strip of laminate structure 100) in this embodiment. Alternative embodiments however, may only comprise of one grounding connection point or where there are two have them separated by a different distance to that seen (for example in embodiments that do not employ an elongate strip shape for the laminate structure 100).

Due to the direct relationship between the removed portions 105 of the first non-conductive layer, the exposed first surfaces of the conductive layer, and the grounding connection points, it is understood (for the sake of conciseness and clarity) that referring to the location of any of these features from herein the specification may implicitly refer to the others.

As such and furthermore, the removed portions 105 of the first non-conductive layer 102 in this particular embodiment of Figures 1a-c is seen to be situated on the flanges 106 described above. And in particular at the distal end of the elongate strip. This is done so as to allow a convenient location for a grounding connection point. This distal end location may be beneficial as it may be proximal to other circuitry or securement infrastructure that the laminate structure 100 or electrical conduit 102 is adjacent. In alternative embodiments however, this location of the removed portion 105 of the first non-conductive layer 102 and the exposed first surface of the conductive layer may be elsewhere on the laminate structure 100. The location of the removed portions 105 of the first non-conductive layer at the flanges 106 of the laminate structure 100 may ensure that a grounding connection achieved through a mechanical fixing (not shown) that protrudes through the thickness of the laminate structure 100 does not bisect the electrical conduit 101. In some embodiments however, the removed portion 105 may be directly overlying the electrical conduit 101. In these embodiments, the grounding connection may only contact the exposed surface of the conductive layer 104 rather than protruding through it.

Furthermore, also seen in Figure 1b is a central aperture 107 located on and through the centre of the exposed first and second surfaces. The first and second exposed surfaces of the conductive layer are also circular in this embodiment, and as such so are the corresponding removed portions 105 and grounding connection points.

Also seen in Figure 1b is a chevron shaped recess 108 that extends from in between the first and second removed portions 105 of the first non-conductive layer 102 and into the centre of the elongate strip of the laminate structure 100. The base of this chevron shaped recess 108 is flat in the embodiment seen in Figure 1b. The depth of the chevron shaped recess 108 in Figure 1b is such that it extends across all three layers of the laminate structure 100. This recess 108 complements the shape of a grounding fixing (not shown) and may therefore aid in the grounding connection between a second conductive material (not shown) and the conductive layer 104. The recess 108 may also aid in the securement of the elongate strip of the laminate structure 100 at one or both ends. This also exposes the electrical conduit 101, and may allow the electrical conduit 101 to be electrically connected to a connector (not shown), or to an external member (not shown).

Figure 2 shows a full view of the elongate strip of the laminate structure 100. This full view further shows third and fourth removed portions 105 of the first non-conductive layer 102 located at the proximal end of the elongate strip. As in line with the above, these third and fourth removed portions 105 lead to the exposure of the conductive layer 104 in these locations and as such enable the exposed third and fourth surfaces of the conductive layer 104 to be seen and contactable. This provides a set of grounding connection points on either end of the elongate strip and allow the laminate structure 100 to be securely fixed at both ends in a plurality of applications.

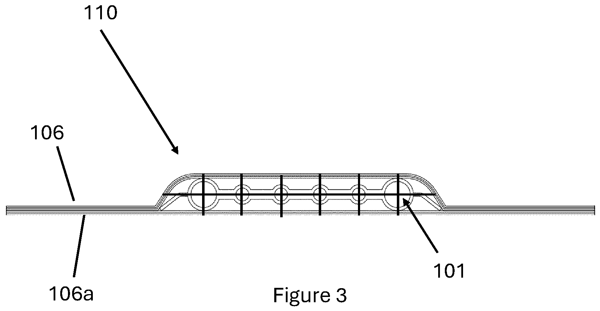

The structure of the elongate strip seen in Figure 2 and partially seen in Figure 1 is such that it has a thickness that is substantially less than its width and length. Here, thickness is defined as the direction that spans all three layers of the laminate structure. The length of the elongate strip is the direction that is seen as the longest dimension in Figure 3. The width is the direction seen to span line AB in Figure 2.

Figure 3 shows the laminate structure 100 of Figures 1 and 2 being employed alongside a second laminate structure 100a of the same to form an electrical connection member 110 comprising a textile cover that encapsulates the electrical conduit 101. In doing so, the textile cover forms a faraday cage around the electrical conduit 101.

More specifically, Figure 3 shows the electrical connection member that is formed by virtue of having the electrical conduit interposed between first 100 and second 100a laminate structures described above (both of the same laminate structures). And wherein these components are dimensioned such that the first 100 and second 100a laminate structures have a greater width than the electrical conduit 101 and extend beyond the width of the electrical conduit 101 to form flanges 106, 106a. These flanges 106, 106a are then attached together forming the faraday cage. The method of this attachment is explored in more detail later in this description.

In this arrangement, both the first 100 and second 100a laminate structures may be arranged such that the first non-conductive layer 102 (as described in the description of Figures 1 and 2) of each laminate structure 100, 100a is on the outside of the textile cover or electrical connection member 110 (i.e. not adjacent the electrical conduit 101). Each, or only one of the first non-conductive layers 102 may have a removed portion or a grounding connection point.

Where the grounding connection point is present on both of the laminate structures said grounding connection points may align with one another such that they are on opposing faces of the electrical connection member. This may make forming a faraday cage by virtue of electrical connection between these grounding points simple and efficient.

As such the attachment between the two laminate structures 100, 100a in this embodiment is between a first side of the second non-conductive layer 103 of the first laminate structure 100 and a first side of the second non-conductive layer 103 of the second laminate structure 100a. Wherein the first side of the second non-conductive layer 103 is as described for Figures 1 and 2 and refers to the side of the second-conductive layer 103 facing or adjacent to the electrical conduit 101 (or not directly attached to the conductive layer 104).

Furthermore, the depth of the chevron shaped recess 108 (which may be any shape) although not seen in this Figure but as described in the description passage of Figure 1b may be such that it extends across a portion of the electrical conduit 101. This may expose at least one wire (not seen) of the electrical conduit 101 and allow for its implementation in a further electrical connection. These exposed wires (not shown) are seen in Figures 1b and 2. As such, the view of Figure 2 may be an accurate representation of the electrical connection means 110 (or textile cover) as well as the laminate structure 100 alone.

Furthermore, the central apertures 107 (as described for Figure 1b) of the exposed surfaces of the conductive layers 104, 104a of both the first 100 and second 100a laminate structures are co-axial and extend through the entire thickness of the textile cover 110. This may allow for a more effective fixing arrangement as these central apertures 107 may hold a mechanical fixing more effectively as a result. These central apertures may enable electrical connection between the exposed surfaces of both laminate structures. Therefore, the faraday cage may be formed effectively and simply based on these exposed surfaces.

Any suitable means for electrical connection may be inserted through the central aperture. This includes the use of a screw or the like, or any other means such as a wire, solder, or conductive element. This may electrically connect the conductive layer within the first laminate and the conductive layer within the second laminate together

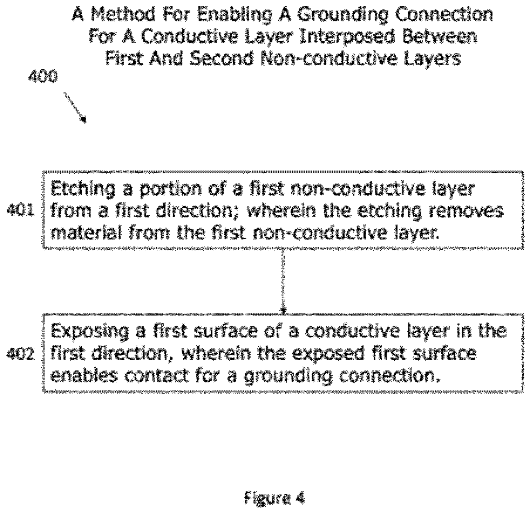

Figure 4 shows a method for enabling a grounding connection for a conductive layer interposed between first and second non-conductive layers, wherein the method comprises the steps of; etching a portion of a first non-conductive layer from a first direction; wherein the etching removes material from the first non-conductive layer (step 401); exposing a first surface of a conductive layer in the first direction, wherein the exposed first surface enables contact for a grounding connection (402).

It is understood that although the method steps described here (and herein) relate closely to the arrangement of the laminate structure described in Figures 1-3, they can naturally be applied to (and are intended to be) any structure requiring a grounding connection point of a conductive layer when this conductive layer is encapsulated within non-conductive layers. As such, the method steps are firstly described for a general embodiment and then, where appropriate, will be related to the laminate structure described in Figures 1-3.

In one implementation, step 401 sees the incremental removal of a greater depth of the portion of a first non-conductive layer of a general embodiment. This is done until the entire depth of the portion of the first non-conductive layer is removed and a first surface of the conductive layer is exposed. This portion of the first non-conductive layer that is being etched, in the embodiment of the laminar structure described above, relates to the removed portion of the first non-conductive layer. And the first surface of the conductive layer that is subsequently exposed from this etching step relates to the exposed first surface of the conductive layer.

In an alternative implementation of step 401, this incremental etching may be replaced by an etching process that removes an entire depth of the portion of the first non-conductive layer that is to be etched, prior to removing material in a plane that is parallel with that of the first non-conductive layer (or along the surface of the conductive layer). This may be particularly useful in embodiments where a large amounts of material is required to be removed quickly.

Either of the above procedures may be implemented in a modular manner, wherein modular etching may etch the portion of the first non-conductive layer to be removed in a series of lines smaller than the planform area of the portion. Either of the above procedures may also be implemented by etching in a more volumetric manner, for example by the removal of an entire top surface of this portion.

Both of the above described etching procedures may be executed by use of a laser. As such, the etching of the portion of the first non-conductive layer may be the laser etching of the portion of the first non-conductive layer. Here, the laser may be incident upon the first side of the first non-conductive layer and etch towards the conductive layer. This is the first direction of the etching process.

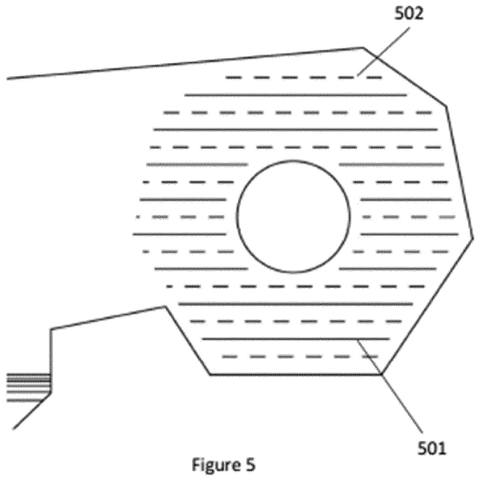

One particular implementation of the etching process, and that seen in Figure 5, relates to etching lines across the portion of the first non-conductive layer to be removed. More particularly, this step relates to firstly etching a first series of etched lines (denoted 501 in Figure 5 and shown as complete lines) across the portion of the first non-conductive layer. These etched lines are parallel and spaced from one another. Secondly, this etching procedure then relates to the etching of a second series of etched lines (denoted 502 and shown as dashed lines) across the portion of the first non-conductive layer. This second series of etched lines are etched in between the etched lines of the first series (and therefore after the first series). In this embodiment, the spacing between the etched lines of the second series and that for the first series is 0.25mm, however can be in the range of 0.1mm and 1mm. Etching in this manner allows for the minimising of concentrated heat energy that is localised in the etched portions yet maintains the efficiency of the etching process.

Furthermore, although Figure 5 is an image of the grounding connection point of the laminate structure as described in Figures 1-3. The etching procedure described here may, once again, apply to a more general embodiment relating to any arrangement of a conductive layer interposed between first and second non-conductive layers. The method steps described here, are not intended to be limited only to the creation of a grounding connection point for a laminate structure described in Figures 1-3.

Furthermore, the method steps executed above may be performed more effectively should the conductive layer of the described arrangement be resistant to the laser or etching means. As such, should the laser be incident upon the conductive layer after the removal of the portion of the first non-conductive later, minimal damage is done to the conductive layer. This introduces a larger tolerance to the etching process. This is the case when etching is performed on the structure detailed in relation to Figures 1-3.

The method may further involve the puncturing of an aperture through the exposed first surface of the conductive layer, and through the thickness of the conductive layer. This aperture may also extend through the thickness of the second non-conductive layer. This method may be performed by a mechanical punch. Optionally, this aperture may be provided by having a second laser capable of providing more energy per unit area at any one time, and using this second laser to puncture the conductive layer in order to form the aperture. In some embodiments a single laser may be used for the etching and the puncturing. Where a single laser is used it may have at least two modes, one that will not puncture the conductive layer (for etching) and one for puncturing the conductive layer (for producing the aperture). This puncturing step may be particularly relevant to the laminate structure described in Figures 1-3. A first conductive material may then be attached to the first exposed surface of the conductive layer after the etching process and utilising the punctured central aperture. This conductive material may also be attached to the first exposed surface of the conductive layer of the second laminate, where the second laminate is positioned on the reverse side of the electrical connection member.

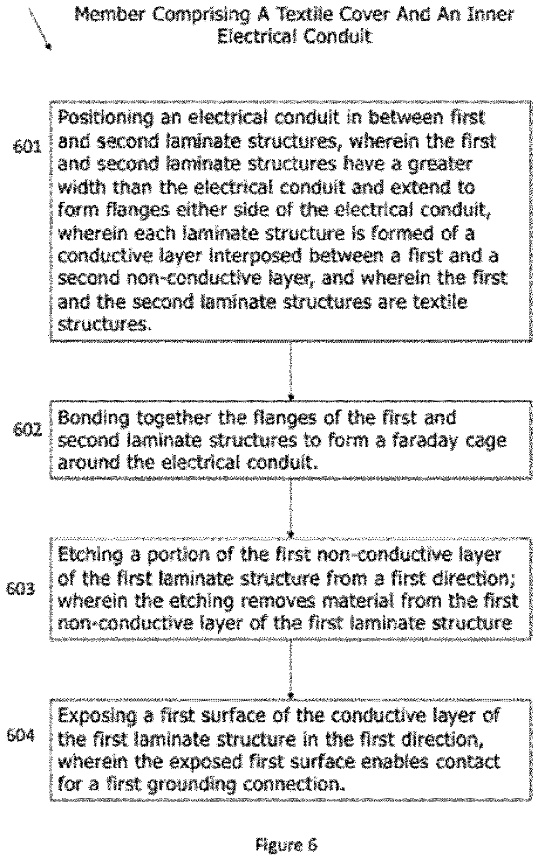

Figure 6 shows a flowchart of a method for producing an electrical connection member comprising a textile cover and an inner electrical conduit, wherein the method comprises the steps of; positioning an electrical conduit in between first and second laminate structures, wherein the first and second laminate structures have a greater width than the electrical conduit and extend to form flanges either side of the electrical conduit, wherein each laminate structure is formed of a conductive layer interposed between a first and a second non-conductive layer, and wherein the first and the second laminate structures are textile structures (step 601); bonding together the flanges of the first and second laminate structures to form a faraday cage around the electrical conduit (step 602); etching a portion of the first non-conductive layer of the first laminate structure from a first direction; wherein the etching removes material from the first non-conductive layer of the first laminate structure (step 603); exposing a first surface of the conductive layer of the first laminate structure in the first direction, wherein the exposed first surface enables contact for a first grounding connection (step 604).

The method 600, in particular step 601, relates closely to the formation of the electrical connection member 110 of Figure 3, with the employment of first 100 and second 100a laminate structures as described in Figures 1-2.

Furthermore, the bonding step 602 further involves the application of an adhesive to the flanges 106, 106a of the first 100 and second 100a laminate structures. In particular, this step involves the application of the adhesive to the flange portions of the first side of the second non-conductive layers 103, 103a of each of the first 100 and second 100a laminate structures. Following the application of the adhesive, this bonding step may further comprise the compression of the flanges 106, 106a of each of the laminate structures together. This adhesive may be the same as that used to attach together the first 102 and second non-conductive 103 layers with the conductive layers when forming the laminate structure (as described above).

Although not shown in Figure 6, but as touched upon previously, the laminate structures 100, 100a may themselves be formed by attaching the first non-conductive layer 102 to a first side of the first conductive layer 104 and attaching the second non-conductive layer 103 to a second side of the first conductive layer 104. Here, the second side of the first non-conductive layer 102 contacts the first side of the conductive layer 104. And the second side of the second non-conductive layer 103 contacts the second side of the conductive layer 104.

It is understood that steps 603 and 604 may take place before steps 601 and 602.

Furthermore, the details of the steps 603 and 604 relating to the etching of a portion of the first non-conductive layer 102 to enable a grounding connection may replicate any of the steps described in the description of Figure 5. These are not repeated here for the sake of conciseness and clarity.

However, as outlined previously, the electrical connection member 110 comprising the textile cover may have more than one grounding connection point (or exposed surfaces of the conductive layers), wherein both sides of the electrical connection member 110 (both the first 100 and second 100a laminate structures) need to be subjected to steps 603 and 604. To address this, and to enable the grounding connection on both sides of the electrical connection member 110, the method may further involve etching the second laminate structure 100a of the electrical connection member 110 after the etching of the first laminate structure 100. This may further involve rotating the electrical connection member 110 after the enabling the first grounding connection (on the first laminate structure 102) and then enabling the second grounding connection through the same method steps. Both these grounding connections may be enabled at the distal end of the electrical connection member 110.

Furthermore, although not seen in the flowchart of Figure 6, the method may further comprise puncturing an aperture 107 through the exposed surfaces of both the conductive layers 104 (of the first 100 and second 100a laminate structures).

Furthermore, a recess 108 may also be formed on the distal end of the electrical connection member 110 where the grounding connections are enabled. This recess may further shape the exposed surfaces of the conductive layers of both the first 100 and second 100a laminate structures into circular shapes. The recess 108 may also be of substantially chevron shape and define such a shape in between the two exposed surfaces. This recess may be cut or etched.

The method may also comprise exposing at least one electrical wire (not shown) of the electrical conduit 101 such that a portion of the electrical wire resides in the recess. This may be achieved by the recess cutting and etching process should the recess be formed after the electrical connection member is positioned in between laminate structure as the etching and cutting process may be such that it extends through a portion of the electrical conduit. This step may also involve pulling the electrical wire (or wires) into the recess.

The above embodiments are to be understood as illustrative examples. Further embodiments are also envisaged. It is to be understood that any feature described in relation to any one embodiment may be used alone, or in combination with other features described and may also be used in combination with one or more features of any other of the embodiments, or any combination of any other of the embodiments.

Furthermore, equivalents and modifications not described above may also be employed without departing from the scope of the invention, which is defined in the accompanying claims.

In some examples, one or more memory elements can store data and/or program instructions used to perform the methods described herein. This may particularly relate to a processor used to determine the steps to be performed, and when each step has been completed. Embodiments of the disclosure provide tangible, nontransitory storage media comprising program instructions operable to program a processor to said method.

The processor/controller of such method of use (and any of the methods, activities or instructions outlined herein) may be implemented with fixed logic such as assemblies of logic gates or programmable logic such as software and/or computer program instructions executed by a processor. Other kinds of programmable logic include programmable processors, programmable digital logic (e.g. a field programmable gate array (FPGA), an erasable programmable read only memory (EPROM), an electrically erasable programmable read only memory (EEPROM), an application specific integrated circuit (ASIC) or any other kind of digital logic, software, code, electronic instructions, flash memory, optical disks, CD-ROMs, DVD ROMs, magnetic or optical cards, other types of machine-readable mediums suitable for storing electronic instructions, or any suitable combination thereof.

## Claims

1. A method for producing an electrical connection member comprising a textile cover and an inner electrical conduit, wherein the method comprises the steps of;
positioning an electrical conduit in between first and second laminate structures, wherein the first and second laminate structures have a greater width than the electrical conduit and extend to form flanges either side of the electrical conduit, wherein each laminate structure is formed of a conductive layer interposed between a first and a second non-conductive layer, and wherein the first and the second laminate structures are textile structures;
bonding together the flanges of the first and second laminate structures to form a faraday cage around the electrical conduit;
etching a portion of the first non-conductive layer of the first laminate structure from a first direction; wherein the etching removes material from the first non-conductive layer of the first laminate structure;
exposing a first surface of the conductive layer of the first laminate structure in the first direction, wherein the exposed first surface enables contact for a first grounding connection.

2. The method of claim 1, wherein the bonding comprises applying an adhesive to the flanges of the first and second laminate structures and compressing the flanges, optionally wherein the adhesive is a hot melt adhesive; and/or
wherein the method further comprises the steps of forming the first laminate structure; wherein the method of forming the first laminate structure comprises;
attaching the first non-conductive layer to a first side of the first conductive layer;
attaching the second non-conductive layer to a second side of the first conductive layer; optionally
wherein the attachment is an adhesive attachment, further optionally
wherein the adhesive is a hot melt adhesive, further further optionally
wherein the adhesive is a Collano hot melt adhesive; optionally
wherein the method further comprises forming the second laminate structure;
wherein the method of forming the second laminate structure is in accordance with the method of forming the first laminate structure.

3. The method of any preceding claim, wherein the method comprises further enabling the first grounding connection of the conductive layer of the first laminate structure in accordance with the method steps of any of claims 6 to 8; and wherein the first grounding connection is enabled at a distal end of the electrical connection member.

4. The method of any preceding claim, when dependant on claim 3, wherein the method further comprises enabling a second grounding connection of the conductive layer of the second laminate structure ; wherein enabling the second grounding connection comprises;
rotating the electrical connection member after enabling the first grounding connection; and
wherein the second grounding connection is enabled at a distal end of the electrical connection member; optionally
wherein the method further comprises the method steps of enabling the second grounding connection in accordance with the method of any of claims 6 to 8; optionally
wherein the method further comprises puncturing an aperture through the exposed surfaces of the conductive layers of both the first and second laminate structures.

5. The method of any preceding claim, wherein the method further comprises either etching a recess at the distal end of the electrical connection member, such that the recess extends through a portion of the electrical conduit from a first side of the electrical connection member, or
wherein the method further comprises cutting a recess at the distal end of the electrical connection member, such that the recess extends through a portion of the electrical conduit from a first side of the electrical connection member, optionally
when dependant on claim 4, wherein the recess shapes the exposed surfaces of the conductive layers of both the first and second laminate structures into a circular shapes; optionally
wherein the method further comprises exposing at least one electrical wire of the electrical conduit such that a portion of the electrical wire resides in the recess; and/or
wherein the method further comprises pulling at least one electrical wire of the electrical conduit such that a portion of the electrical wire emerges from the conduit into the recess; and/or
wherein the recess is substantially chevron shaped.

6. A method for enabling a grounding connection for a conductive layer interposed between first and second non-conductive layers, wherein the method comprises the steps of;
etching a portion of a first non-conductive layer from a first direction;
wherein the etching removes material from the first non-conductive layer;
exposing a first surface of a conductive layer in the first direction, wherein the exposed first surface enables contact for a grounding connection.

7. The method of claim 6, wherein the etching comprises either the steps of incrementally removing a greater depth of the portion of the first non-conductive layer; and wherein the entire depth of the portion of the first non-conductive layer is incrementally removed to expose the first surface of the conductive layer in the first direction, or
the step of removing material from the first non-conductive layer by decrementing the entire depth of the portion of the first non-conductive layer prior to removing material in a plane that is parallel with the plane of the first non-conductive layer; and/or
wherein the etching comprises the step of laser etching the portion of the first non-conductive layer from the first direction; and/or
wherein the method comprises etching an etched line across the portion of the first non-conductive layer, and wherein the method further comprises etching a first series of etched lines across the portion of the first non-conductive layer, optionally wherein the first series of etched lines are parallel, optionally
wherein the method further comprises etching a second series of etched lines across the portion of the first non-conductive layer, wherein the etched lines of the second series are etched in between the etched lines of the first series, and wherein the second series of etched lines are etched after the first series, optionally wherein the second series of etched lines are parallel, further optionally
wherein the etched lines of the second series of etched lines are spaced from the etched lines of the first series of etched lines, wherein the range of this spacing is between 0.1mm and 1mm, optionally wherein the spacing is 0.25mm.

8. The method of any of claims 6 to 7, wherein the method further comprises the step of the laser being incident upon the first surface of the conductive layer, and wherein the conductive layer is resistant to the laser; and/or
wherein the method further comprises the step of puncturing an aperture through the exposed first surface of the conductive layer and through the thickness of the conductive layer, optionally
wherein the puncturing is performed by a mechanical punch; further optionally
wherein the aperture extends through the second non-conductive layer, wherein the second non-conductive layer is located on a second side of a conductive layer to the first non-conductive layer; and/or
wherein the method comprises the step of attaching a first conductive material to the exposed first surface of the conductive layer.

9. A laminate structure for covering an electrical conduit, wherein the laminate structure comprises;
a first non-conductive layer;
a second non-conductive layer; and
a conductive layer;
wherein the conductive layer is configured to be interposed between the first and second non-conductive layers;
wherein the first non-conductive layer comprises a removed portion;
wherein the removed portion exposes a first surface of the conductive layer in a first direction.

10. The laminate structure of claim 9, wherein the exposed first surface of the conductive layer is configured to form a grounding connection point for a second conductive material; and/or
wherein the exposed first surface of the conductive layer comprises a central aperture for use in the grounding connection point; and/or
wherein the laminate structure is greater in width than the electrical conduit it covers; and wherein the laminate structure extends beyond the width of the electrical conduit to form flanges, optionally
wherein the removed portions are configured to be situated on the flanges, further optionally wherein the exposed first surface of the laminate structure is configured to be situated on the flanges; and/or
wherein the removed portion is circular in shape, optionally wherein the exposed first surface of the conductive layer is circular in shape;
and/or wherein the laminate structure is an elongate strip of the laminate structure, and wherein the laminate structure is an elongate strip of a laminate textile.

11. The laminate structure of any of claims 9 to 10, wherein the removed portion is configured to be situated at a distal end of the elongate strip; optionally wherein the exposed first surface of the conductive layer is configured to be situated at a distal end of the elongate strip, optionally
wherein the laminate structure comprises a second removed portion situated at the distal end of the elongate strip; optionally wherein the laminate structure comprises an exposed second surface of the conductive layer situated at the distal end of the elongate strip, optionally
wherein the first and second removed portions are separated by the width of the elongate strip; optionally wherein the exposed first and second surfaces of the conductive layer are separated by the width of the elongate strip; and/or
wherein the distal end of the elongate strip comprises a chevron-shaped recess, optionally
wherein the chevron-shaped recess extends from in between the first and second removed portions and into the elongate strip in a longitudinal direction, optionally
wherein the depth of the chevron-shaped recess is such that it extends across all three layers of the laminate structure.

12. The laminate structure of any of claims 9 to 11, wherein the removed portion is formed by etching the first non-conductive layer; optionally
wherein the removed portion is formed by laser etching the first non-conductive layer; and/or
wherein one dimension of the elongate strip is substantially less than two other dimensions, optionally wherein the smallest dimension is the thickness of the elongate strip, wherein the thickness of the elongate strip is defined as the dimension that spans the multiple layers of the laminate structure; and/or
wherein the elongate strip comprises attachment means along its lateral edges; and/or
wherein the attachment between the first non-conductive layer and the conductive layer is an adhesive attachment, optionally wherein the attachment between the second non-conductive layer and the conductive layer is an adhesive attachment, further optionally
wherein the adhesive is a hot melt adhesive, further further optionally
wherein the hot melt adhesive is a Collano hot melt adhesive.

13. The laminate structure of any of claims 9 to 12, wherein the first and second non-conductive layers comprise of one or more waterproof layers; and/or
wherein the first non-conductive material is configured to be a made from a nylon ripstop material; and/or
wherein the second non-conductive material is configured to be made form a nylon ripstop material with a TPU backing; and/or
wherein the conductive material is a polyamide material, optionally wherein the conductive layer is a nylon 6.6 riptstop material, further optionally wherein it is a Bremen material; and/or
wherein the laminate structure is configured to form a portion of a Faraday cage around an electrical conduit; and/or
wherein the laminate structure comprises a third removed portion; optionally wherein the laminate structure comprises an exposed third surface of the conductive layer; further optionally wherein the laminate structure comprises a fourth removed portion; further further optionally, wherein the laminate structure comprises an exposed fourth surface of the conductive layer, optionally
when dependant on claim 15, wherein the third removed portion is located at a proximal end of the elongate strip, optionally wherein the exposed third surface of the conductive layer located at a proximal end of the elongate strip; further optionally wherein the fourth removed portion is located at the proximal end of the elongate strip; further further optionally wherein the exposed fourth portion of the conductive layer is located at a proximal end of the elongate strip.

14. An electrical connection comprising a textile cover and an inner electrical conduit, wherein the electrical connection member comprises:
a first laminate structures in accordance with any of claims 9 to 13;
a second laminate structure in accordance with any of claims 9 to 13;
an electrical conduit;
wherein the electrical conduit is interposed between the first and second laminate structures;
wherein the first and second laminate structures have a greater width than the electrical conduit such that the first and second laminate structures extend beyond the width of the electrical conduit;
wherein the extended portions of the first and second laminate structures are attached together to form a faraday cage around the electrical conduit.

15. The electrical connection member of claim 14, wherein the first non-conductive layers of each of the first and second laminate structures are configured to face opposite directions; and/or
wherein the attachment is configured to be between a first side of the second non-conductive layer of the first laminate structure and a first side of the second non-conductive later of the second laminate structure; and/or
wherein the depth of the chevron-shaped recess of both the first and second laminate structures is configured to further extend across a portion of the electrical conduit located in between the first and second laminate structures; and/or
wherein the textile cover is configured to form a faraday cage around the electrical conduit; and/or
wherein the central apertures of the exposed surfaces of the conductive layers of both the first and second laminate structures are co-axial and extend through the entire thickness of the textile cover.
